(19) Europäisches Patentamt
European Patent Office
Office européen des brevets

(11) **EP 2 563 553 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **12726744.1**

(22) Anmeldetag: **06.06.2012**

(51) Int Cl.:
***B25J 9/16*** *(2006.01)*

(86) Internationale Anmeldenummer:
**PCT/EP2012/002422**

(87) Internationale Veröffentlichungsnummer:
**WO 2013/004329 (10.01.2013 Gazette 2013/02)**

(54) **VERFAHREN UND STEUERMITTEL ZUM STEUERN EINES ROBOTERS**

METHOD AND CONTROL MEANS FOR CONTROLLING A ROBOT

PROCÉDÉ ET MOYEN DE COMMANDE POUR COMMANDER UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2011 DE 102011106321**

(43) Veröffentlichungstag der Anmeldung:
**06.03.2013 Patentblatt 2013/10**

(73) Patentinhaber: **KUKA Roboter GmbH**
**86165 Augsburg (DE)**

(72) Erfinder:
• **RÜMPING, Jonas**
**80337 München (DE)**
• **SONNER, Christian**
**80799 München (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**US-A- 5 294 873**

• **WALKER I D: "IMPACT CONFIGURATIONS AND MEASURES FOR KINEMATICALLY REDUNDANT AND MULTIPLE ARMED ROBOT SYSTEMS", IEEE TRANSACTIONS ON ROBOTICS AND AUTOMATION, IEEE INC, NEW YORK, US, Bd. 10, Nr. 5, 1. Oktober 1994 (1994-10-01), Seiten 670-683, XP000471448, ISSN: 1042-296X, DOI: 10.1109/70.326571**
• **BYUNG ROK SO ET AL: "Robot Motion Generation Considering External and Internal Impulses", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, 2. August 2005 (2005-08-02), Seiten 1608-1613, XP010857304, ISBN: 978-0-7803-8912-0**

## Beschreibung

Die vorliegende Erfindung betrifft ein Verfahren und Steuermittel zum Steuern eines, insbesondere humankollaborierenden, Roboters unter Auflösung einer roboter- oder aufgabenspezifische Redundanz des Roboters.

Als humankollaborierender Roboter wird vorliegend insbesondere ein Roboter bezeichnet, der mit einem Menschen physisch interagiert, beispielsweise, indem ein Aufenthalt des Menschen in einem Arbeitsraum des Roboters vorgesehen ist. Insbesondere bei solchen Roboterapplikationen ist es wünschenswert, die Folgen einer Kollision eines Kontaktpunktes des Roboters mit seiner Umgebung, insbesondere dem Menschen, zu reduzieren. Bisher werden hierzu, beispielsweise nach ISO-10218, Grenzwerte vorgegeben, etwa eine maximale TCP-Geschwindigkeit von 0,2 bis 0,25 m/s. Dieser worst-case-Ansatz beeinträchtigt jedoch die Performance von, insbesondere humankollaborierenden, Robotern.

Allgemein kann die Pose bzw. Stellung eines Roboters mit f Freiheitsgraden durch seine Gelenkkoordinaten $q \in \mathfrak{R}^f$ eindeutig beschrieben werden. Andererseits kann die Position und Orientierung eines Referenzpunktes bzw. -systems des Roboters, insbesondere seines TCPs, durch dessen Koordinaten $z^T = (x^T \in \mathfrak{R}^{m \leq 3} \quad \alpha^T \in \mathfrak{R}^{n \leq 3})$ vorgegeben werden, wobei x beispielsweise die kartesischen Koordinaten des TCPs, $\alpha$ dessen Orientierung, etwa in Euler- oder Kardanwinkel, beschreibt. Die Differenz f-(m + n) definiert die Redundanz des Manipulators. Eine roboterspezifische Redundanz ergibt sich damit stets, wenn der Manipulator mehr als 6 Freiheitsgrade bzw. Gelenke aufweist, eine aufgabenspezifische Redundanz, wenn weniger Referenzpunktkoordinaten vorgegeben werden als der Manipulator Freiheitsgrade aufweist, zum Beispiel nur die Position des TCPs eines sechsachsigen Roboters (f-$(m+n)$ = 6-(3+0) = 3). Zur kompakteren Darstellung wird vorliegend auch ein sechsachsiger Manipulator mit einer oder mehreren Zusatzachsen, beispielsweise einem Portal oder einem Werkzeugtisch, sowie ein System von mehreren miteinander kooperierenden Manipulatoren verallgemeinernd als ein Roboter im Sinne der vorliegenden Erfindung bezeichnet.

Anschaulich kann ein redundanter Roboter einen vorgegebenen Referenzpunktkoordinatenvektor in wenigstens zwei, insbesondere in unendlich vielen verschiedenen redundanten Posen darstellen. Um aus vorgegebenen Referenzpunktkoordinaten Steuergrößen für die Gelenkantriebe des Roboters zu ermitteln, muss daher die Redundanz rechnerisch aufgelöst bzw. eine von den redundanten Posen ausgewählt werden.

Hierzu werden bisher unterschiedliche Gütekriterien minimiert: so kann die Redundanz genutzt werden, um den Kehrwert des Abstandes zu singulären Posen und/oder Hindernissen zu minimieren, energieeffiziente Bahnen zu planen oder dergleichen.

Die US 5 294 873 A offenbart kinematische Funktionen zur Redundanzauflösung für Manipulatoren durch einen konfigurierbaren Regler. In der Beschreibung wird offenbart, dass die kinematischen Funktionen, welche durch den Regler auf den Manipulator angewendet werden, verschiedene Aspekte beinhalten können. Diese Aspekte können die gezielte Ansteuerung oder Minimierung der folgenden Parameter sein: Gravitationslast, Gelenkträgheit, Hebelarm bzw. Kraftgewinn ("mechanical advantage"), Geschwindigkeitsverhältnis zwischen Endeffektor-Geschwindigkeit und Gelenk-Geschwindigkeit, Endeffektor-Sensitivität, Endeffektor-Nachgiebigkeit sowie Endeffektor-Stoßkraft.

Die Druckschrift "Impact Configurations and Measures for Kinematically Redundant and Multiple Armed Robot Systems", in "IEEE Transactions on Robotics and Automation", Bd.10, Nr.5, S.670-683, 1994 (DOI:10.1109/70.326571) betrifft Verfahren zur Evaluierung von Stoß- und Kontaktkräften insbesondere für Mehrfach-Manipulatoren (Manipulatoranordnungen mit mehreren einzelnen Manipulatoren). Dabei werden Anwendungen zur Planung und Simulation diskutiert, welche die Nullraumbewegung redundanter Kinematiken nutzen. Weiterhin wird vorgeschlagen die Nullraumbewegung der Gelenke in einem Sekundärtask so zu steuern, dass die im Primärtask zu lösende Kontaktaufgabe mit einer minimalen Kontaktkraft erfolgt Dabei wird der Gradient der Kraft durch die Nullraumbewegung im Subtask umgesetzt. Des Weiteren werden Strategien zur Stoßkraft-Minimierung für Multiarm-Robotersysteme analysiert.

Die Druckschrift "Robot Motion Generation Considering External and Internal Impulses", in "Proceedings of the 2005 IEEE/RSJ International Conference on Intelligent Robots and Systems", S.1608-1613, welche auf die D2 Bezug nimmt, betrifft ebenfalls die Verwendung der Gradienten-methode zur Nutzung der kinematischen Redundanz eines Robotersystems. Ziel ist es, den internen Impuls als auch den externen Impuls beeinflussen und insbesondere minimieren zu können. Dabei ist der interne Impuls definiert als der Impuls, der auf die Gelenke wirkt. Der Impuls, der bei Kollision direkt am Endeffektor auftritt wird externer Impuls genannt. Bei einer Sägeapplikation soll zum Beispiel der interne Impuls minimiert und der externe Impuls maximiert werden. Beim Gehen einer Laufmaschine soll sowohl der interne Impuls minimiert werden, als auch der externe, i.e. es wird ein weiches Aufsetzen des Fußes der Laufmaschine gewünscht.

Aufgabe der vorliegenden Erfindung ist es, den Betrieb eines, insbesondere humankollaborierenden, Roboters zu verbessern.

Diese Aufgabe wird durch ein Verfahren mit den Merkmalen des Anspruchs 1 bzw. ein Steuermittel mit den Merkmalen des Anspruchs 9 gelöst. Anspruch 10 stellt ein Computerprogrammprodukt, insbesondere einen Datenträger oder ein dauerhaftes oder flüchtiges Speichermedium, mit einem darauf gespeicherten Computerprogramm zur Durchführung eines erfindungsgemäßen Verfahrens unter Schutz, die Unteransprüche betreffen vorteilhafte Weiterbildungen. Ein Mittel im Sinne der vorliegenden Erfindung kann gleichermaßen soft- und/oder hardwaretechnisch ausgebildet sein, insbesondere kann es ein Programm oder Programmmodul und/oder eine Rechen- und Speichereinheit umfassen. Ein Steuermittel kann somit gleichermaßen eine hardwaretechnische Steuerung eines Roboters, insbesondere seinen Steuerschrank und/oder einen Computer zur Programmierung des Roboters, als auch ein hierin ablaufendes (Unter)Programm sein.

Der Erfindung liegt die Idee zugrunde, eine Redundanz eines Roboters zu nutzen, um die Folgen einer Kollision eines Kontaktpunktes des Roboters mit seiner Umgebung, insbesondere dem Menschen, zu reduzieren: ein redundanter Roboter weist in unterschiedlichen redundanten Posen ein unterschiedliches Gefährdungspotential auf. Indem, beispielsweise bei einer Bahnplanung, eine günstige Pose ausgewählt wird, können so bei gleichbleibender Arbeitsgeschwindigkeit die Folgen einer Kollision reduziert werden. Gleichermaßen ist es möglich, die Arbeitsgeschwindigkeit zu erhöhen und so die Performance des Roboters zu erhöhen.

Erfindungsgemäß wird daher vorgeschlagen, zur Auflösung der Redundanz eine posenabhängige Trägheitsgröße des Roboters zu minimieren. Eine Verringerung einer Trägheitsgröße reduziert den Impuls bzw. Stoß, den der Roboter bei einer Kollision in das Hindernis einträgt und damit sein Gefährdungspotential.

In einer bevorzugten Ausführung wird diese Trägheitsgröße, insbesondere auf Basis von Gelenkkoordinaten und/oder einer vorgegebenen Richtung, vorab, d.h. offline, oder während des Betriebs, d.h. online, ermittelt. Die Ermittelung auf Basis von Gelenkkoordinaten projiziert die physikalischen Trägheiten, etwa Gliedermassen, in die Richtung der Freiheitsgrade des Roboters und ist daher vorteilhaft, um deren Redundanz aufzulösen. Die Ermittelung auf Basis einer oder mehrerer vorgegebener Richtungen ermöglicht es, das Gefährdungspotential gezielt für diese Richtung(en) zu minimieren. Insbesondere kann die Trägheitsgröße auf Basis einer vorgegebenen Bewegungsrichtung und/oder wenigstens einer möglichen Kollisions-Stoßrichtung des Roboters ermittelt werden, die sich zum Beispiel aus einer Bahnplanung, einer manuellen Steuerung zum Teachen oder dergleichen ergeben kann. Bewegt sich der Roboter in dieser vorgegebenen Richtung, weist er ein verringertes Gefährdungspotential im Falle einer Kollision auf.

Insbesondere kann die Trägheitsgröße eine effektive Masse, ein effektives Trägheitsmoment und/oder eine Pseudomatrix der kinetischen Energie $\Lambda_v$, $\Lambda_\omega$, umfassen, vorzugsweise sein. In der quadratischen Form

$$\frac{1}{2}\dot{\boldsymbol{q}}^T \cdot \boldsymbol{M}(\boldsymbol{q}) \cdot \dot{\boldsymbol{q}}$$

der kinetischen Energie beschreibt die Massenmatrix $\boldsymbol{M(q)}$ die Trägheitseigenschaften des Manipulators im Konfigurationsraum. Auch für redundante Manipulatoren ist mit den Jacobi-Matrizen der Translation und

Rotation $\boldsymbol{J} = \begin{pmatrix} \boldsymbol{J_v} \\ \boldsymbol{J_\omega} \end{pmatrix}$ die translatorische bzw. rotatorische Pseudomatrix der kinetischen Energie $\Lambda_v$, $\Lambda_\omega$ definiert durch:

$$\Lambda_v^{-1}(\boldsymbol{q}) = \underbrace{\left(\frac{\partial \boldsymbol{x}}{\partial \boldsymbol{q}}\right)}_{J_v(\boldsymbol{q})} \cdot \boldsymbol{M}^{-1}(\boldsymbol{q}) \cdot \boldsymbol{J}_v^T(\boldsymbol{q})$$

$$\Lambda_\omega^{-1}(\boldsymbol{q}) = \underbrace{\left(\frac{\partial \dot{\boldsymbol{\alpha}}}{\partial \dot{\boldsymbol{q}}}\right)}_{J_\omega(\boldsymbol{q})} \cdot \boldsymbol{M}^{-1}(\boldsymbol{q}) \cdot \boldsymbol{J}_\omega^T(\boldsymbol{q}) \tag{1}$$

wobei vorzugsweise als Referenzpunkt mit den Koordinaten $\boldsymbol{z}^T = (\boldsymbol{x}^T \; \alpha^T)$ ein oder mehrere mögliche Kontaktpunkte des Roboters, mit dem bzw. denen er mit der Umgebung, insbesondere einem kooperierenden Menschen kollidieren kann, oder auch ein ausgezeichneter Referenzpunkt wie insbesondere sein TCP, ein Massenmittelpunkt einer robotergeführten Nutzlast oder ein Arbeitspunkt eines robotergeführten Werkzeugs gewählt werden kann.

Für eine durch den Einheitsvektor u vorgegebene Richtung beschreiben

$$\frac{1}{m_u(\Lambda_v)} = \boldsymbol{u}^T \cdot \Lambda_v^{-1}(\boldsymbol{q}) \cdot \boldsymbol{u}$$

$$\frac{1}{I_u(\Lambda_\omega)} = \boldsymbol{u}^T \cdot \Lambda_\omega^{-1}(\boldsymbol{q}) \cdot \boldsymbol{u} \tag{2}$$

die effektive Masse $m_u(\Lambda_v)$ bzw. das effektive Trägheitsmoment $I_u(\Lambda_\omega)$ längs der Richtung bzw. um die Drehachse u, d.h. jeweils auf Basis der Richtung u. Sie beschreiben anschaulich die translatorische bzw. rotatorische Trägheit des (redundanten) Manipulators längs der Richtung bzw. um die Drehachse.

Nachfolgend wird die Erfindung insbesondere am Beispiel der effektiven Masse weiter erläutert, die sich für den TCP als Referenzpunkt und dessen durch u vorgegebene Bewegungsrichtung ergibt. Zusätzlich oder alternativ können jedoch auch andere Richtungen, beispielsweise Bewegungsrichtungen, wie sie bei einer Fehlfunktion von Antrieben des Roboters resultieren, und/oder andere Punkte, beispielsweise Eckpunkte des Roboters, die besonders kollisionsgefährdet sind, zugrundegelegt werden. Zusätzlich oder alternativ zu einer oder mehreren effektiven Massen können beispielsweise Eigenwerte der Pseudomatrizen der kinetischen Energie als Trägheitsgröße zugrundegelegt werden.

Mit der effektiven Masse $m_u(\Lambda_v(\boldsymbol{q}))$ kann für jede durch die Gelenkwinkel $\boldsymbol{q}$ eindeutig vorgegebene Pose des Roboters eine rechnerische Trägheitsgröße ermittelt werden. Diese kann in einer bevorzugten Ausführung als ein Gütekriterium einer Bahnplanung verwendet werden. Dabei kann die erfindungsgemäß minimierte Trägheitsgröße das einzige Gütekriterium einer Bahnplanung darstellen. Gleichermaßen kann es, insbesondere als gewichtetes Gütekriterium, zusammen mit anderen Gütekriterien wie etwa einer Energieoptimalität, einem Abstand zu Hindernissen, singulären, Soll- und/oder vorhergehenden Posen, berücksichtigt werden, beispielsweise in einer Pareto- oder Funktionaloptimierung. So kann beispielsweise bei einer Bahnplanung das Erreichen von Soll-Posen als Gütekriterium oder Nebenbedingung vorgegeben werden, die Minimierung der Trägheitsgröße als (weiteres) Gütekriterium.

Insbesondere bei einer Optimierung im Rahmen einer Bahnplanung oder bei einer Online-Steuerung des Roboters, etwa beim Anfahren zu teachender Referenzpunktpositionen, kann in einer vorteilhaften Weiterbildung ein Gradient der Trägheitsgröße, vorzugsweise numerisch, insbesondere diskretisiert, ermittelt und eine Pose des Roboters in einer Richtung dieses Gradienten variiert werden. Wird als Beispiel wieder die effektive Masse $m_u(\Lambda_v(\boldsymbol{q}))$ zugrundegelegt, weist ein Gradient

$$\nabla m_{\boldsymbol{u}} = \left(\frac{\partial m_{\boldsymbol{u}}}{\partial \boldsymbol{q}}\right) \approx \left(\frac{m_u(\boldsymbol{q_2}) - m_u(\boldsymbol{q_1})}{\boldsymbol{q_2} - \boldsymbol{q_1}}\right) \qquad (3)$$

in Richtung des größten Anstiegs der effektiven Masse. Durch Änderung der Pose in negativer Gradientenrichtung können entsprechend Posen mit geringeren effektiven Massen ermittelt werden.

Zusätzlich oder alternativ zu einer solchen gradientenbasierten Minimierung kann eine Trägheitsgröße in einer bevorzugten Ausführung auch dadurch minimiert werden, dass für zwei oder mehr redundante Posen jeweils die zugehörige Trägheitsgröße ermittelt und diejenige Pose mit einer geringeren, insbesondere der geringsten Trägheitsgröße ausgewählt wird. Wie insbesondere hieraus klar wird, wird unter einer Minimierung im Sinne der vorliegenden Erfindung insbesondere die Auswahl einer Pose verstanden, die wenigstens lokal eine kleinste Trägheitsgröße aufweist. Dabei ist die Erfindung jedoch nicht auf eine solche absolute Minimierung beschränkt, vielmehr kann es zur aufgabengemäßen Verbesserung des Betriebs des Roboters, insbesondere Reduzierung seines Gefährdungspotentials und/oder Verbesserung seiner Performance etwa durch eine höhere Arbeitsgeschwindigkeit, bereits ausreichen, die Pose mit der kleineren Trägheitsgröße von zwei oder mehr redundanten Posen auszuwählen. Zur kompakteren Darstellung wird daher vorliegend auch eine Verringerung einer Trägheitsgröße verallgemeinernd als Minimieren der Trägheitsgröße im Sinne der vorliegenden Erfindung bezeichnet.

Insbesondere, wenn eine Bahn des Roboters vorab geplant wird, kann in einer bevorzugten Weiterbildung für einen oder mehrere, vorzugsweise diskrete, insbesondere äquidistante oder ausgezeichnete, beispielsweise geteachte, Bahnpunkte jeweils die Trägheitsgröße minimiert werden. Dabei wird als vorgegebene Richtung vorzugsweise die Bahntangente im jeweiligen Bahnpunkt zugrundegelegt. Fährt der Roboter die solcherart geplante Bahn ab, weist er, vorzugsweise in seiner Bewegungs- und damit einer möglichen Kollisionsrichtung, ein verringertes Gefährdungspotential auf bzw. kann die Bahn bei gleichem Gefährdungspotential schneller abfahren.

Zusätzlich oder alternativ können auch für einen oder mehrere, vorzugsweise äquidistant verteilte, Raumpunkte, insbesondere Punkte des Konfigurations- oder Arbeitsraums des Roboters, vorzugsweise jeweils für eine oder mehrere Richtungen, beispielsweise Koordinatenachsenrichtungen eines Weltkoordinatensystems, jeweils die Pose mit einer minimierten Trägheitsgröße vorab ermittelt und, vorzugsweise tabellarisch, abgespeichert werden. Im Betrieb oder bei einer Bahnplanung kann dann jeweils aus den nächstgelegenen abgespeicherten Posen inter- bzw. extrapoliert werden, um die Redundanz aufzulösen. Auf diese Weise kann bei geringer Rechenleistung bzw. -zeit eine Minimierung der Trägheitsgröße durchgeführt werden, indem die Redundanz des Roboters aufgelöst wird. In einer bevorzugten Weiterbildung kann die Auflösung der Redundanz auch mehrstufig erfolgen, indem beispielsweise einerseits ein oder mehrere redundante Freiheitsgrade so bestimmt werden, dass die Trägheitsgröße minimiert wird, und andere Freiheitsgrade zur Darstellung vorgegebener Referenzpunktkoordinaten und/oder zur Optimierung anderer Gütekriterien genutzt werden.

Gleichermaßen können auch jeweils optimale Posen in Hinblick auf die Trägheitsgröße und andere Kriterien zur Redundanzauflösung ermittelt und aus diesen Posen, beispielsweise durch Mittelung, Interpolation oder dergleichen, eine Pose ausgewählt werden.

In einer bevorzugten Ausführung wird eine Pose mit minimaler Trägheitsgröße als Referenzpose, beispielsweise als Startwert einer Optimierung, vorgegeben. In einer bevorzugten Weiterbildung wird eine virtuelle Kraft im Nullraum des redundanten Roboters aufgeprägt, die dessen Kinematik zu der Referenzpose virtuell vorspannt, so dass sich der Roboter im Betrieb oder bei einer Bahnplanung der Referenzpose nähert. Eine solche Nullraumkraft kann beispielsweise bei einer Bahnplanung unter Berücksichtigung anderer Gütekriterien und/oder Nebenbedingungen aufgeprägt werden, um zugleich das Gefährdungspotential zu reduzieren bzw. eine bessere Performance zu erreichen.

Bei der Minimierung der Trägheitsgröße können eine oder mehrere ausgewählte oder gleichermaßen alle Freiheitsgrade des Roboters variiert werden. Beispielsweise können sechs Gelenke, die eine vollständige Abbildung des Arbeitsraums darstellen, zum Erreichen einer vorgegebenen Referenzpunktpose genutzt werden, weitere Gelenke zur Minimierung der Trägheitsgröße. Gleichermaßen kann es vorteilhaft sein, ein oder mehrere basisnächste Gelenkkoordinaten, etwa ein Karussell- und/oder Schwingendrehwinkel, die üblicherweise durch schwerere Roboterglieder dargestellt werden, zur Minimierung der Trägheitsgröße zu variieren.

Wie vorstehend ausgeführt, kann durch eine erfindungsgemäße Auflösung der Redundanz unter Minimierung einer posenabhängigen Trägheitsgröße des Roboters dessen Gefährdungspotential, insbesondere bei gleichbleibender Geschwindigkeit des Roboters, gesenkt werden. Gleichermaßen ist es möglich, bei gleichbleibendem oder verringertem Gefährdungspotential die Geschwindigkeit des Roboters zu erhöhen. Hierzu gemäß der vorliegenden Erfindung eine Geschwindigkeit des Roboters so vorgegeben, dass eine posenabhängige Bewegungsgröße einen Grenzwert nicht überschreitet.

Die Bewegungsgröße enthält, in einer Ausführung ist, ein Produkt der Trägheitsgröße und einer Potenz einer Geschwindigkeit des Roboters oder einer ihrer Ableitungen Ist in einer bevorzugten Weiterbildung die Trägheitsgröße die effektive Masse, kann als Bewegungsgröße deren Produkt mit der Geschwindigkeit des Referenzpunktes in der vorgegebenen Bewegungsrichtung oder auch deren Produkt mit dem Quadrat dieser Geschwindigkeit ermittelt werden. Ersteres entspricht einem in Bewegungsrichtung projizierten Impuls, letzteres einer in Bewegungsrichtung projizierten kinetischen Energie. Gibt man die Geschwindigkeit des Roboters, mit der er beispielsweise eine geometrisch vorgegebene Bahn abfährt, entsprechend vor, kann er die Bahn schnellstmöglich abfahren, wobei sein Gefährdungspotential, beschrieben durch den projizierten Impuls oder die projizierte kinetische Energie, unter einem vorgegebenen Grenzwert bleibt.

Weitere Vorteile und Merkmale ergeben sich aus den Unteransprüchen und den Ausführungsbeispielen. Hierzu zeigt, teilweise schematisiert:

Fig. 1:    einen aufgabenredundanten Roboter in verschiedenen Posen; und

Fig. 2:    den Ablauf eines erfindungsgemäßen Verfahrens.

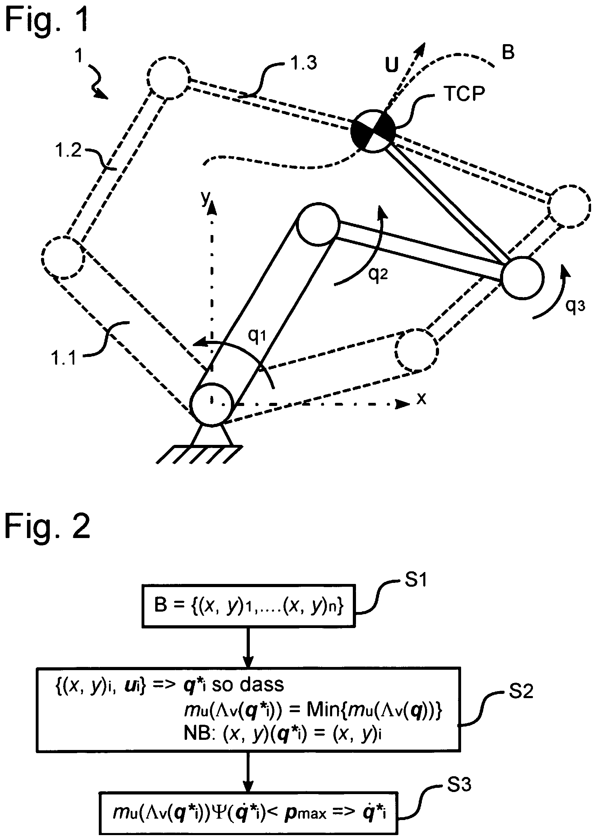

Fig. 1 zeigt in einem zur Erläuterung vereinfachten Ausführungsbeispiel einen dreigelenkigen Roboter 1 mit einer schweren, an einer festen Basis gelagerten Schwinge 1.1, einem daran gelenkig befestigten, deutlich leichteren Arm 1.2 und einer an dessen schwingenfernen Ende gelenkig gelagerten, leichten Hand 1.3 mit dem TCP. Alle drei Drehgelenke weisen parallele, auf der Zeichenebene der Fig. 1 senkrecht stehende Drehachsen auf.

Besteht die Aufgabe des Roboters 1 darin, mit seinem TCP ohne Berücksichtigung von dessen Orientierung eine Bahn B in der Zeichenebene abzufahren, ist der Roboter mit seinen drei Freiheitsgraden $q = (q_1\ q_2\ q_3)^T$ bezüglich der vorgegebenen Position $z = x = (x\ y)^T$ redundant: man erkennt, dass zu derselben kartesischen TCP-Position $(x, y)$ auf der Bahn B in der Zeichenebene der Fig. 1 bzw. dem Arbeitsraum des Roboters unterschiedliche, redundante Posen existieren, von denen in Fig. 1 exemplarisch drei dargestellt sind.

Berechnet man für jede dieser Posen nach Gl. (2) die effektive Masse $m_u(\Lambda_v(q))$ bezüglich des Tangenteneinheitsvektors $u$ an die Bahn B im Punkt $(x, y)$, so ergibt sich für die ausgezogen dargestellte Pose die geringste effektive Masse, da hier die Projektion der Masse der massiven Schwinge 1.1 verschwindet. Dementsprechend wird bei einer Bahnplanung zum Abfahren der Bahn B mit dem TCP die Redundanz dadurch aufgelöst, dass für jede Stützstelle jeweils die Pose mit der kleinsten effektive Masse ausgewählt und als Soll-Pose vorgegeben wird. Dies kann, wie vorstehend erläutert, durch die Ermittlung der Trägheitsgrößen $m_u(\Lambda_v(q_{i,j}))$ für unterschiedliche redundante Gelenkwinkelsätze $q_i$, die jeweils dieselbe TCP-Stützposition $(x, y)_j$ ergeben, und die Auswahl der Gelenkwinkelkombination mit der kleinsten effektiven Masse erfolgen. Gleichermaßen ist es möglich, vorab für äquidistante Raumpunkte $(x_a, y_b)$ und Richtungen $u_c$ jeweils die Pose $q^*_{a, b, c}$, mit der minimalen effektiven Masse zu ermitteln und abzuspeichern. Bei der Planung der Bahn B oder gleichermaßen auch einem manuellen Online-Steuern des Roboters 1 kann dann eine Pose unter Beibehaltung der TCP-Position und Berücksichtigung der vorgegebenen Bewegungsrichtung automatisch in Richtung der nächstgelegenen dieser abgespeicherten, gefährdungsoptimalen Posen variiert werden. Stattdessen kann auch die effektive Masse, gleichermaßen in analytischer oder numerischer Form, als Gütekriterium bei der Bahnplanung berücksichtigt werden.

Fig. 2 verdeutlicht schematisiert dieses Verfahren: in einem ersten Schritt S1 werden Stützstellen $(x, y)_1$, $(x, y)_2$,... für den TCP vorgegeben, um mit diesem die Bahn B abzufahren.

Dann wird in einem Schritt S2 für jede dieser Stützstellen $(x, y)_i$ zunächst eine vorgegebene Bewegungsrichtung $\boldsymbol{u}_i$ als Einheitstangentenvektor an die Bahn ermittelt.

Nun wird in einer Optimierung diejenige Pose $\boldsymbol{q}^*_i$ ermittelt, die die Nebenbedingung ("NB") erfüllt: $(x, y)(\boldsymbol{q}^*_i) = (x, y)_i$, d.h. in der Pose nimmt der TCP die vorgegebene Stützstelle ein, und bei der die effektive Masse $m_u(\Lambda_v(\boldsymbol{q}^*_i))$ nach Gl. (2) minimal ist, d.h. kleiner als die effektive Masse $m_u(\Lambda_v(\boldsymbol{q}_i))$ für wenigstens eine andere redundante Pose, für die gilt: $(x, y)(\boldsymbol{q}_i) = (x, y)_i$.

Abschließend wird in einem Schritt S3 die Fahrgeschwindigkeit $\dot{\boldsymbol{q}}_i$ des Roboters so festgelegt, dass eine Funktion, insbesondere das Produkt der effektiven Masse und der kartesischen TCP-Geschwindigkeit $(\dot{x}, \dot{y})_i = \Psi(\dot{\boldsymbol{q}}_i)$, unter einem Grenzwert bleibt. Wie hieraus klar wird, muss die Geschwindigkeit, die vorgegeben wird (hier die Gelenkwinkelgeschwindigkeit $\dot{\boldsymbol{q}}_i$) und die Geschwindigkeit, die zur Ermittlung der Bewegungsgröße verwendet wird, nicht identisch sein, dies kann jedoch der Fall sein, wenn beispielsweise die TCP-Geschwindigkeit vorgegeben wird.

Bezugszeichenliste

| | |
|---|---|
| 1 | Roboter |
| 1.1 | Schwinge (leicht) |
| 1.2 | Arm (leicht) |
| 1.3 | Hand |
| B | Bahn |
| TCP | Tool Center Point (Referenzpunkt) |

**Patentansprüche**

1. Verfahren zum Steuern eines, insbesondere humankollaborierenden, Roboters (1), wobei eine roboter- oder aufgabenspezifische Redundanz des Roboters aufgelöst wird, **dadurch gekennzeichnet, dass** zur Auflösung der Redundanz eine posenabhängige Trägheitsgröße $(m_u(\Lambda_v(\boldsymbol{q})))$ des Roboters minimiert wird, wobei eine Geschwindigkeit $((\dot{x}, \dot{y})_i, \dot{\boldsymbol{q}}_i)$ des Roboters so vorgegeben wird, dass eine posenabhängige Bewegungsgröße, die ein Produkt der Trägheitsgröße und einer Potenz einer Geschwindigkeit des Roboters oder einer ihrer Ableitungen $(m_u \cdot \dot{\boldsymbol{q}}; m_u \cdot \dot{\boldsymbol{q}}^2)$ enthält, einen Grenzwert nicht überschreitet.

2. Verfahren nach Anspruch 1, **dadurch gekennzeichnet, dass** die Trägheitsgröße eine effektive Masse $(m_u(\Lambda_v(\boldsymbol{q})))$, ein effektives Trägheitsmoment $(I_u(\Lambda_\omega))$ und/oder eine Pseudomatrix der kinetischen Energie $(\Lambda_v, \Lambda_\omega)$ umfasst, insbesondere ist.

3. Verfahren nach einem der vorhergehenden Ansprüche, **dadurch gekennzeichnet, dass** die Trägheitsgröße, insbesondere auf Basis von Gelenkkoordinaten (q) und/oder einer vorgegebenen Richtung (u), vorab oder während des Betriebs ermittelt wird.

4. Verfahren nach einem der vorhergehenden Ansprüche, **dadurch gekennzeichnet, dass** die Trägheitsgröße als ein Gütekriterium einer Bahnplanung verwendet wird.

5. Verfahren nach einem der vorhergehenden Ansprüche, **dadurch gekennzeichnet, dass** ein Gradient $(\nabla m_u)$ der Trägheitsgröße ermittelt und eine Pose des Roboters in einer Richtung dieses Gradienten variiert wird.

6. Verfahren nach einem der vorhergehenden Ansprüche, **dadurch gekennzeichnet, dass** für wenigstens zwei redundante Posen, insbesondere zu wenigstens einem Bahn- und/oder Raumpunkt, die Trägheitsgröße ermittelt und diejenige Pose mit der geringeren Trägheitsgröße ausgewählt wird.

7. Verfahren nach einem der vorhergehenden Ansprüche, **dadurch gekennzeichnet, dass** eine Pose mit minimaler Trägheitsgröße als eine Referenzpose vorgegeben wird.

**8.** Verfahren nach einem der vorhergehenden Ansprüche, **dadurch gekennzeichnet, dass** zur Minimierung der Trägheitsgröße ein oder mehrere Freiheitsgrade des Roboters variiert werden.

**9.** Steuermittel zum Steuern eines, insbesondere humankollaborierenden, Roboters (1), mit einem Redundanzauflösungsmittel zum Auflösen einer roboter- oder aufgabenspezifischen Redundanz des Roboters, **dadurch gekennzeichnet, dass** das Mittel zur Durchführung eines Verfahrens nach einem der vorhergehenden Ansprüche eingerichtet ist.

**10.** Computerprogrammprodukt mit einem darauf gespeicherten Computerprogramm, zur Durchführung eines Verfahrens nach einem der vorhergehenden Ansprüche 1 bis 8, wenn es in ein Steuermittel zum Steuern eines Roboters, insbesondere nach Anspruch 9, geladen ist.

**Claims**

**1.** A method of controlling a robot (1), in particular a human-collaborating robot (1), wherein a robot-specific or task-specific redundancy of the robot is solved, **characterised in that** a pose-dependent inertia variable ($m_u(\Lambda_v(\boldsymbol{q}))$) of the robot is minimised in order to solve the redundancy, wherein a velocity ($(\dot{x}, \dot{y})_i$, $\dot{\boldsymbol{q}}_i$) of the robot is prescribed such that a pose-dependent movement variable which includes a product of the inertia variable and a power of a speed of the robot or one of its derivatives ($m_u \cdot \dot{\boldsymbol{q}}$; $m_u \cdot \dot{\boldsymbol{q}}^2$) does not exceed a threshold value.

**2.** The method according to claim 1, **characterised in that** the inertia variable comprises, in particular is, an effective mass ($m_u(\Lambda_v(\boldsymbol{q}))$), an effective moment of inertia ($I_u(\Lambda_\omega)$) and/or a pseudo matrix of the kinetic energy ($\Lambda_v$, $\Lambda_\omega$).

**3.** The method according to any one of the preceding claims, **characterised in that** the inertia variable is determined in advance or during operation, in particular on the basis of joint coordinates ($\boldsymbol{q}$) and/or a prescribed direction (u).

**4.** The method according to any one of the preceding claims, **characterised in that** the inertia variable is used as a quality criterion of a path plan.

**5.** The method according to any one of the preceding claims, **characterised in that** a gradient ($\nabla m_u$) of the inertia variable is determined and a pose of the robot is varied in a direction of this gradient.

**6.** The method according to any one of the preceding claims, **characterised in that** the inertia variable is determined for at least two redundant poses, in particular for at least one point of the path and/or point in space, and that the pose having the smaller inertia variable is chosen.

**7.** The method according to any one of the preceding claims, **characterised in that** a pose with minimal inertia variable is prescribed as a reference pose.

**8.** The method according to any one of the preceding claims, **characterised in that** one or more degrees of freedom of the robot are varied in order to minimise the inertia variable.

**9.** Control means for controlling a robot (1), in particular a human-collaborating robot (1), comprising a redundancy solving means for solving a robot-specific or task-specific redundancy of the robot, **characterised in that** the means is arranged to carry out a method according to any one of the preceding claims.

**10.** Computer program product having recorded thereon a computer program for carrying out a method according to any one of claims 1 to 8 when it is loaded onto a control means for controlling a robot, in particular according to claim 9.

**Revendications**

**1.** Procédé de commande d'un robot (1), en particulier collaborant avec les humains, dans lequel une redondance du robot spécifique au robot ou à la tâche est déclenchée, **caractérisé en ce que** pour déclencher la redondance une grandeur d'inertie ($m_u(\Lambda_v(q))$) dépendant de la pose du robot est minimisée, dans lequel une vitesse ($(\dot{x}, \dot{y})_i$, $\dot{q}_i$) du robot est prescrite de sorte qu'une grandeur de déplacement dépendant de la pose qui contient un produit de la grandeur d'inertie et d'une puissance d'une vitesse du robot ou d'une de ses dérivées ($m_u \dot{q}$ ; $m_u \dot{q}^2$), ne dépasse

pas une valeur limite.

**2.** Procédé selon la revendication 1, **caractérisé en ce que** la grandeur d'inertie est en particulier une masse effective ($m_u(\Lambda_v(q))$), un couple d'inertie effectif ($I_u(\Lambda_\omega)$) et/ou une pseudomatrice qui comporte de l'énergie cinétique ($\Lambda_v$, $\Lambda_\omega$).

**3.** Procédé selon l'une des revendications précédentes, **caractérisé en ce que** la grandeur d'inertie est déterminée, en particulier sur la base de coordonnées d'articulation (q) et/ou d'une direction prescrite (u), avant ou pendant le fonctionnement.

**4.** Procédé selon l'une des revendications précédentes, **caractérisé en ce que** la grandeur d'inertie est utilisée comme un critère de qualité d'une planification de trajectoire.

**5.** Procédé selon l'une des revendications précédentes, **caractérisé en ce qu'**un gradient ($\nabla m_u$) de la grandeur d'inertie est déterminé et une pose du robot est variée dans un sens de ce gradient.

**6.** Procédé selon l'une des revendications précédentes, **caractérisé en ce que** pour au moins deux poses redondantes, en particulier en au moins un point de trajectoire et/ou d'espace, la grandeur d'inertie est déterminée et la pose comportant la grandeur d'inertie la plus faible est sélectionnée.

**7.** Procédé selon l'une des revendications précédentes, **caractérisé en ce qu'**une pose comportant une grandeur d'inertie minimale est prescrite comme pose de référence.

**8.** Procédé selon l'une des revendications précédentes, **caractérisé en ce que** pour la minimisation de la grandeur d'inertie un ou plusieurs degrés de liberté du robot sont variés.

**9.** Moyen de commande pour la commande d'un robot (1), en particulier collaborant avec les humains, avec un moyen de déclenchement de redondance pour le déclenchement d'une redondance du robot spécifique au robot ou à la tâche, **caractérisé en ce que** le moyen est aménagé pour la réalisation d'un procédé selon l'une des revendications précédentes.

**10.** Produit de programme informatique avec un programme informatique enregistré dessus pour la réalisation d'un procédé selon l'une des revendications précédentes 1 à 8 lorsqu'il est chargé dans un moyen de commande pour la commande d'un robot, en particulier selon la revendication 9.

# Fig. 1

# Fig. 2

$$B = \{(x, y)_1, ....(x, y)_n\}$$ — S1

$$\{(x, y)_i, \boldsymbol{u}_i\} => \boldsymbol{q}^*_i \text{ so dass}$$
$$m_u(\Lambda_v(\boldsymbol{q}^*_i)) = \text{Min}\{m_u(\Lambda_v(\boldsymbol{q}))\}$$
$$\text{NB}: (x, y)(\boldsymbol{q}^*_i) = (x, y)_i$$ — S2

$$m_u(\Lambda_v(\boldsymbol{q}^*_i))\Psi(\dot{\boldsymbol{q}}^*_i) < \boldsymbol{p}_{max} => \dot{\boldsymbol{q}}^*_i$$ — S3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5294873 A

**In der Beschreibung aufgeführte Nicht-Patentliteratur**

- Impact Configurations and Measures for Kinematically Redundant and Multiple Armed Robot Systems. *IEEE Transactions on Robotics and Automation,* 1994, vol. 10 (5), 670-683

- Robot Motion Generation Considering External and Internal Impulses. *Proceedings of the 2005 IEEE/RSJ International Conference on Intelligent Robots and Systems,* 1608-1613